# EUROPEAN PATENT APPLICATION

(11) **EP 4 401 429 A1**
(43) Date of publication of application: **17.07.2024**
(21) Application number: 22874186.4
(22) Date of filing: 26.04.2022
(51) Int. Cl.: H04W 4/24, H04M 15/00, H04L 12/14

(54) **CHARGING METHOD AND APPARATUS**

(30) Priority: 01.10.2021 CN 202111166971
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Isarpatent
(86) International application number: PCT/CN2022/089213
(87) International publication number: WO 2023/050787

(57) **Abstract**

A charging method and apparatus are provided, and are applied to a roaming scenario. The method includes: A charging trigger apparatus obtains roaming charging configuration information after determining that a user corresponding to a data connection is a roaming user, where the roaming charging configuration information includes a roaming charging information level indication, service information, a roaming multiple user plane function reporting indication, a roaming multiple access data connection session reporting indication, and/or a roaming charging information reporting condition. The charging trigger apparatus generates roaming charging information of the data connection session based on the roaming charging configuration information, and reports the roaming charging information to a roaming charging system.

## Description

This application claims priority to Chinese Patent Application No. 202111166971.X, filed with the China National Intellectual Property Administration on October 1, 2021 and entitled "CHARGING METHOD AND APPARATUS", which is incorporated herein by reference in its entirety.

### TECHNICAL FIELD

This application relates to the field of communication technologies, and in particular, to a charging method and apparatus.

### BACKGROUND

Current roaming settlement uses a GSMA-defined international roaming settlement procedure TAP (Transferred Account Procedure). The TAP generates a detailed record based on each piece of transfer data, transfer data per minute, or transfer data per message. Therefore, roaming settlement performed in a TAP manner causes an extremely large data amount, and consequently cannot meet a real-time requirement of a fifth generation (Fifth Generation, 5G) mobile communication technology service, and cannot be applied to a small-volume data service such as an IoT.

Currently, another type of roaming settlement uses a billing and charging evolution (Billing and Charging Evolution, BCE) manner. BCE supports charging based on daily, monthly, quarterly, yearly, or agreed-upon summarized usage data. However, in a roaming settlement process in the BCE manner, if a visited network (visited network) and a home network (home network) are inconsistent in the settlement process, detailed data records of the visited network (visited network) and the home network (home network) need to be consistent.

In a 5G roaming architecture, settlement, reconciliation, and conflict resolution between the visited network and home network are based on a BCE procedure. Charging information collected from the visited network and home network is a basis for generating a detailed data record (detailed data record, DDR) in a roaming scenario. There are various 5G service requirements. Therefore, DDRs for roaming settlement of the 5G services also have a plurality of requirements. However, in a current BCE-based roaming settlement manner between the visited network and the home network, it is difficult for a DDR document generated by the visited network to support roaming settlement, reconciliation, and conflict resolution. As a result, settlement requirements of a plurality of services cannot be met.

### SUMMARY

Embodiments of this application provide a charging method and apparatus, so that in a roaming charging scenario, roaming charging information reported for a data connection session of a user can meet requirements of a plurality of services, and support roaming settlement, reconciliation, and conflict resolution between a visited network and a home network.

To achieve the foregoing objective, a first aspect of embodiments of this application provides the following technical solutions. The technical solutions include: A charging trigger apparatus obtains roaming charging configuration information after determining that a user corresponding to a data connection session is a roaming user, where the roaming charging configuration information includes a roaming charging information level indication, service information, a roaming multiple user plane function reporting indication, a roaming multiple access data connection session reporting indication, and/or a roaming charging information reporting condition. The charging trigger apparatus generates roaming charging information of the data connection session based on the roaming charging information level indication, the service information, the roaming multiple user plane function reporting indication, the roaming multiple access data connection session reporting indication, and/or the roaming charging information reporting condition. The charging trigger apparatus reports the roaming charging information to a roaming charging system.

According to the foregoing method, after being extended, the roaming charging configuration information includes the roaming charging information level indication, the service information, the roaming multiple user plane function reporting indication, the roaming multiple access data connection session reporting indication, and/or the roaming charging information reporting condition, so that roaming charging information that supports a plurality of settlement requirements may be generated based on a roaming charging profile. In this way, the roaming charging system may perform flexible roaming settlement based on different roaming charging configuration information, and provide data support for conflict resolution when a conflict occurs.

For example, in this embodiment of this application, the roaming charging information level indication is used, so that charging information level synchronization of a user in a visited network and a home network can be ensured, thereby meeting different service requirements of different operators for a user group, such as roaming settlement at a quality of service level, settlement at a service level, or low-cost settlement of a total volume at a data connection session level.

Alternatively, the service information is used, so that roaming settlement may be performed for a specific service (for example, an MEC service) or a specific type of services (for example, an IoT small-volume service), and a roaming settlement capability between operators better supports a roaming requirement of a specific industry and a specific customer.

Alternatively, the roaming multiple user plane function reporting indication is used, so that an operator may perform roaming settlement more accurately based on use of a network resource, to implement true payment based on use of the network resource, and make a roaming settlement capability more refined to meet different settlement requirements.

Alternatively, the roaming multiple access protocol data unit session reporting indication is used, so that roaming information of a fixed network access and a mobile access may be distinguished, to better support an accurate settlement capability of a roaming network of a fixed-mobile convergence network, and avoid a loss caused by packaging the fixed access and the mobile access together for settlement in the visited network (when a user uses more mobile accesses in the visited network) or the home network (when the user uses more fixed accesses in the visited network).

Alternatively, the roaming charging information reporting condition is used, so that the roaming charging information may be flexibly divided based on a specified time point, and then support more flexible settlement periods (for example, by day, by week, by month, and by quarter).

In an optional embodiment, that a charging trigger apparatus determines that a user corresponding to a protocol data unit data connection session is a roaming user includes: The charging trigger apparatus determines, based on a home network identifier, of the user, that is reported by user equipment, that the user is the roaming user. The user is determined as the roaming user based on the home network identifier, of the user, that is reported by the user equipment, so that the user is determined as the roaming user more accurately.

In an optional embodiment, the obtaining roaming charging configuration information of a user includes: The charging trigger apparatus obtains roaming charging configuration information configured on the charging trigger apparatus as the roaming charging configuration information. The roaming charging configuration information of the user is configured on the charging trigger apparatus, so that the method for obtaining the roaming charging configuration information of the user is more flexible and diversified.

In an optional embodiment, the obtaining roaming charging configuration information of a user includes: The charging trigger apparatus receives roaming charging configuration information sent by the roaming charging system. The charging trigger apparatus uses the roaming charging configuration information sent by the roaming charging system as the roaming charging configuration information. The roaming charging configuration information is obtained through the roaming charging system, so that the method for obtaining the roaming charging configuration information of the user is more flexible and diversified.

In an optional embodiment, the roaming charging information level indication is: an indication at a quality of service flow (QoS Flow) level, an indication at a service level, or an indication at a data connection session level. When the roaming charging information level indication is the indication at the QoS flow level, the roaming charging information includes charging information corresponding to the QoS flow. When the roaming charging information level indication is the indication at the service level, the roaming charging information includes charging information corresponding to the service. Alternatively, when the roaming charging information level indication is the indication at the data connection session level, the roaming charging information includes charging information corresponding to the data connection session. After being extended, the roaming charging configuration information includes the roaming charging information level indication, so that the roaming charging information that supports a plurality of settlement requirements may be generated based on the roaming charging profile. In this way, the roaming charging system may perform flexible roaming settlement based on different roaming charging configuration information, and provide data support for conflict resolution when a conflict occurs.

In an optional embodiment, when the roaming charging information level indication is the indication at the service level, the charging information corresponding to the service includes usage of a service, in the data connection session, that corresponds to a rating group, or usage of a service, in the data connection session, that corresponds to a service identifier, or usage of a service, in the data connection session, that corresponds to a service type, or usage of a service, in the data connection session, that corresponds to a rating group and a service identifier. According to this method, the charging information corresponding to the service is based on the roaming charging information level, so that the service-based charging information may be provided, and a plurality of charging requirements of the roaming charging system may be met.

In an optional embodiment, the roaming charging information level is the indication at the service level, the roaming charging configuration information further includes service-related information, the service-related information includes a service type, a rating group, and/or a service identifier, and the roaming charging information further includes the service type, the rating group, and/or the service identifier. The roaming charging information level is the indication at the service level, and the roaming charging configuration information further includes the service-related information, so that the service-based charging information may be provided, and a plurality of charging requirements of the roaming charging system may be met.

In an optional embodiment, when the charging trigger apparatus is a charging trigger apparatus in the visited network, the roaming charging configuration information further includes a network slice identifier, of the home network, that corresponds to the data connection session; and/or
the roaming charging configuration information further includes the multiple user plane function UPF reporting indication, and the roaming charging information further includes charging information reported by each user plane function in the data connection session or charging information obtained by combining charging information reported by a plurality of UPFs in the data connection session; and/or
the roaming charging configuration information includes the multiple access data connection session reporting indication, and the roaming charging information includes charging information corresponding to each access in the data connection session or charging information obtained by combining charging information corresponding to a plurality of accesses in the data connection session.

According to this method, the roaming charging configuration information includes the foregoing plurality of types of information, so that the roaming charging information based on the roaming charging configuration information may be provided, and a plurality of charging requirements of the roaming charging system may be met. Further, the network slice identifier may support settlement based on a network slice, and different usage fees may be used for different slices (for example, slices of different types and different quality requirements), to reduce slice usage costs on a basis of avoiding losses of a visited network operator and a home network operator.

In an optional embodiment, when the roaming charging configuration information includes the roaming charging information reporting condition, the generating roaming charging information includes: The charging trigger apparatus determines that the roaming charging information reporting condition is met, generates the roaming charging information, and reports the roaming charging information to the roaming charging system.

According to a second aspect, an embodiment of this application provides a roaming charging method. The method includes: A roaming charging system receives a charging resource creation request, of a data connection session of a user, that is sent by a charging trigger apparatus, where the charging resource creation request includes data connection session information of the user. The roaming charging system generates second roaming charging configuration information, where the second roaming charging configuration information includes a roaming charging information level indication, service information, a roaming multiple user plane function reporting indication, a roaming multiple access data connection session reporting indication, and/or a roaming charging information reporting condition.

The roaming charging system sends the second roaming charging configuration information to the charging trigger apparatus; and receives roaming charging information sent by the charging trigger apparatus, where the roaming charging information is generated based on the second roaming charging configuration information that is sent by the roaming charging system.

According to the foregoing method, after being extended, the roaming charging configuration information includes the roaming charging information level indication, the service information, the roaming multiple user plane function reporting indication, the roaming multiple access data connection session reporting indication, and/or the roaming charging information reporting condition, so that roaming charging information that supports a plurality of settlement requirements may be generated based on a roaming charging profile. In this way, the roaming charging system may perform flexible roaming settlement based on different roaming charging configuration information, and provide data support for conflict resolution when a conflict occurs.

In an optional embodiment, the charging resource creation request includes first roaming charging configuration information, the first roaming charging configuration information includes a roaming charging information level indication, service information, a roaming multiple user plane function reporting indication, a roaming multiple access data connection session reporting indication, and/or a roaming charging information reporting condition, and the second roaming charging configuration information is used by the charging trigger apparatus to update the first roaming charging configuration information in the charging trigger apparatus.

According to this method, the roaming charging system may update the roaming charging configuration information, so that the roaming charging configuration information can better meet a charging service requirement of the roaming charging system.

In an optional embodiment, the roaming charging system determines, based on the first roaming charging configuration information carried in the charging resource creation request, to generate the second roaming charging configuration information for updating the first roaming charging configuration information. According to this method, the roaming charging system determines to update the roaming charging configuration information, so that the roaming charging configuration information can better meet the charging service requirement of the roaming charging system.

In an optional embodiment, the roaming charging system generates a charging data record (Charging Data Record, CDR) for the user, where the charging data record includes the roaming charging information. According to this method, the CDR generated by the roaming charging system includes the roaming charging information, so that the roaming charging information meets the charging service requirement of the roaming charging system.

In an optional embodiment, when the roaming charging information includes charging information corresponding to a QoS flow, the charging data record includes the charging information corresponding to the QoS flow; or when the roaming charging information includes charging information corresponding to a service, the charging data record includes the charging information corresponding to the service; or when the roaming charging information includes charging information corresponding to a data connection session, the charging data record includes the charging information corresponding to the data connection session. According to this method, the charging data record includes charging information at different levels, so that the roaming charging system may perform flexible roaming settlement based on different roaming charging configuration information, and provide data support for conflict resolution when a conflict occurs.

In an optional embodiment, when the charging trigger apparatus is a charging trigger apparatus in a visited network, the roaming charging information includes a network slice identifier, of a home network, that corresponds to the data connection session, and the charging data record includes the network slice identifier of the home network. The charging data record includes the network slice identifier of the home network, so that the roaming charging information meets a requirement of the roaming charging system for a charging service related to a network slice.

In an optional embodiment, the roaming charging system generates a detailed data record, where the detailed data record includes a detailed data record corresponding to the QoS flow, a detailed data record corresponding to the service, or a detailed data record corresponding to the data connection session, and the detailed data record is generated based on the charging data record. According to this method, the detailed data record includes the detailed data record corresponding to the QoS flow, the detailed data record corresponding to the service, or the detailed data record corresponding to the data connection session, so that the roaming charging system may implement QoS flow-based charging or service-based charging, and meet different service requirements.

According to a third aspect, a roaming charging apparatus is provided. The apparatus has a function of the charging trigger apparatus for implementing the method according to the first aspect. The function may be implemented by hardware, or may be implemented by hardware executing corresponding software. The hardware or the software includes one or more modules corresponding to the function.

According to a fourth aspect, a roaming charging apparatus is provided. The apparatus includes: a processor and a memory. The memory is configured to store computer-executable instructions. When the apparatus runs, the processor executes the computer-executable instructions stored in the memory, so that the apparatus performs the method according to any one of the first aspect. The apparatus may be specifically a chip in the charging trigger apparatus in the method according to any one of the first aspect.

According to a fifth aspect, a computer-readable storage medium is provided. The computer-readable storage medium stores instructions. When the instructions are run on a computer, the computer is enabled to perform the roaming charging method according to any one of the first aspect.

According to a sixth aspect, a computer program product including instructions is provided. When the computer program product runs on a computer, the computer is enabled to perform the roaming charging method according to any one of the first aspect.

For technical effects brought in by any design manner in the second aspect to the sixth aspect, refer to technical effects brought in by different design manners in the first aspect. Details are not described herein again.

According to a seventh aspect, a roaming charging system is provided. The system has a function of implementing the method according to the second aspect. The function may be implemented by hardware, or may be implemented by hardware executing corresponding software. The hardware or the software includes one or more modules corresponding to the function.

According to an eighth aspect, a roaming charging system is provided. The system includes a processor and a memory. The memory is configured to store computer-executable instructions. When the apparatus runs, the processor executes the computer-executable instructions stored in the memory, so that the apparatus performs the method according to any one of the second aspect.

According to a ninth aspect, a computer-readable storage medium is provided. The computer-readable storage medium stores instructions. When the instructions are run on a computer, the computer is enabled to perform the charging method according to any one of the second aspect.

According to a tenth aspect, a computer program product including instructions is provided. When the computer program product runs on a computer, the computer is enabled to perform the roaming charging method according to any one of the second aspect.

According to an eleventh aspect, a system is provided. The system includes a charging trigger apparatus and a roaming charging system. A control plane function may perform processing performed by the charging trigger apparatus according to any one of the foregoing aspects. The roaming charging system may perform processing performed by the charging function according to any one of the foregoing aspects.

These or other aspects of this application are more concise and easier to understand in descriptions of the following embodiments.

### BRIEF DESCRIPTION OF DRAWINGS

FIG. 1A is a schematic diagram of a structure of a roaming charging system according to an embodiment of this application;
FIG. 1B is a schematic diagram of a structure of a network for implementing roaming in an HR roaming scenario according to an embodiment of this application;
FIG. 2 is a schematic diagram of a hardware structure of a communication device according to an embodiment of this application;
FIG. 3 is a schematic flowchart of a charging method performed in a roaming scenario according to an embodiment of this application;
FIG. 4 is a schematic flowchart of a charging method based on an HR roaming scenario according to an embodiment of this application;
FIG. 5 is a schematic diagram of a structure of an apparatus according to an embodiment of this application;
FIG. 6 is a schematic diagram of a structure of an apparatus according to an embodiment of this application; and
FIG. 7 is a schematic diagram of a structure of a system according to an embodiment of this application.

### DESCRIPTION OF EMBODIMENTS

A network architecture and a service scenario described in embodiments of the present invention are intended to describe technical solutions of embodiments of the present invention more clearly, and do not constitute a limitation on the technical solutions provided in embodiments of the present invention. A person of ordinary skill in the art may know: With evolution of the network architecture and emergence of new service scenarios, the technical solutions provided in embodiments of the present invention are also applicable to similar technical problems.

An "embodiment" mentioned in this specification means that a particular feature, structure, or characteristic described with reference to embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

"A plurality of" means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In this specification, the claims, and the accompanying drawings of this application, the terms "first", "second", "third", "fourth", and the like are intended to distinguish between different objects but do not describe a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

### Terms in this application are defined as follows:

User equipment (user device): is a device of a terminal user. The device may have a wireless communication capability to be connected to a wireless access device through an air interface, or may have a wired communication capability to be connected to a wired access device through a wired interface. From a perspective of a product form, the device may be a smart phone, a laptop (Laptop) computer having a wireless communication function, a tablet computer, a wearable device, an AR (Augmented Reality, augmented reality) device, an IoT (Internet of Things, internet of things) device, a desktop computer on an office desktop, or the like. The device may consume an application service provided by an application server in a data network by using a data connection session.

The user equipment may include a function of UE (user equipment, user equipment) defined in the 3GPP standard specification, for example, UE in a subsequent figure.

Roaming user equipment: is user equipment in a roaming state.

Operator network: is a communication network of an operator in a visited location of user equipment. In embodiments of this application, it is assumed that the user equipment has roamed into the operator network. Therefore, the user equipment is an in-bound roamer (in-bound roamer) of the operator network, and the operator network is a visited network (visited network) of the user equipment, which is a "visited network" for short.

Data network (Data Network, DN): is a network that is for transmitting data and that is formed by using a data switch as a transition point, for example, an internet (Internet), and includes at least one application server (not shown in the figure), to provide an application service for user equipment. Usually, a DNN (data network name, data network name) is used as an identifier of the data network.

Data connection session: is an association (association) between user equipment and a data network, and is configured to provide a connection service for communication between the user equipment and the data network, so that a communication data packet (Packet) may be transmitted back and forth between the user equipment and the data network. A process of creating the data connection session may be initiated by the user equipment, and a process of removing the data connection session may be initiated by the user equipment, or may be initiated by another device (for example, a user plane data gateway). The data connection session may be an IP-CAN (IP-connectivity access network, IP-connectivity access network) session or a protocol data unit session (protocol data unit session, PDU session) defined in the 3GPP standard specification, or may be a session in another form. This is not limited in embodiments of this application. The data connection session may be a protocol data unit session applicable to a 5G network, or may be another session applicable to another network. This is not limited in embodiments of this application.

User plane data gateway: is a core network element that provides a support service for a data connection session (for example, transferring a data packet from user equipment to a data network through the user plane data gateway, or transferring a data packet from a data network to user equipment through the user plane data gateway). The user plane data gateway collects, based on a collection operation configuration parameter, charging information (for example, a service unit usage) related to the data connection session, and provides the collected charging information to a charging trigger apparatus. The collection operation configuration parameter may be locally configured on the user plane data gateway by default, or may be delivered by the charging trigger apparatus to the user plane data gateway.

The user plane data gateway may include a function of a UPF (user plane function, user plane function) device, a function of a PGW-U (packet data network gateway for user plane, user plane packet data gateway), a function of an SGW-U (serving gateway for user plane, serving gateway user plane), or the like that is defined in the 3GPP standard specification. The user plane data gateway may be a user plane function UPF applicable to a 5G network architecture, or may be a network element applicable to another network architecture. This is not limited in embodiments of this application. In subsequent content, for ease of description, an example in which the user plane data gateway is the UPF in the 5G network architecture is used for description.

Roaming charging information: is charging information related to a data connection session in a roaming scenario, and may be charging information, related to a roaming data connection session, that is collected by a charging trigger apparatus in a visited network, or may be charging information, related to a roaming data connection session, that is collected by a charging trigger apparatus in a home network.

Roaming charging configuration parameter: is a configuration parameter related to an operation of roaming charging information. The operation includes a collection operation and/or a reporting operation, the collection operation is to collect roaming charging information from a roaming data connection session, and the reporting operation is to send collected roaming charging information to a corresponding charging processing device. Therefore, the roaming charging configuration parameter includes a collection operation configuration parameter and/or a reporting operation configuration parameter. When one or more roaming charging configuration parameters are shared or synchronized between a home network and a visited network, synchronization and consistency of charging processing results of a same roaming data connection session between the two parties may be improved, thereby reducing errors generated during cross-network (namely, cross-operator network) settlement.

The collection operation configuration parameter is a configuration parameter related to a charging information collection operation, and is used by a user plane data gateway to determine how to collect roaming charging information for the roaming data connection session.

Home routed (HomeRouted, HR) roaming: is a mode that a media route does not choose to be forwarded out locally, but the route returns to a home network and is forwarded through the home network. In the HR roaming mode, all volumes pass through the visited network and home network.

Local breakout (Local Breakout, LBO for short) roaming: After UE roams to a visited network, a media route chooses to be forwarded out locally, instead of routing to a home network. In the LBO roaming mode, all volumes pass only through the visited network.

Multiple access PDU session (multiple access PDU Session): is a PDU session that provides a PDU connection service. The PDU session may be used for one type of access within specific time, or may support a plurality of different types of accesses (for example, support a 3GPP access and a non-3GPP access) at the same time.

A multiple user plane function means that one PDU session relates to a plurality of UPFs.

Inbound UE is UE that moves to a local network (which is the visited network) for access but belongs to another operator network.

A QoS flow is a finest granularity (finest granularity) of QoS forwarding treatment (forwarding treatment) in a communication system. All volumes mapped to a same QoS flow undergo same forwarding treatment (for example, a scheduling policy, a queue management policy, or a rate policy). Different QoS forwarding treatment provided by the communication system uses different QoS flows. If another communication system uses a concept that has a same function as that of a QoS flow, the method in this application is still applicable.

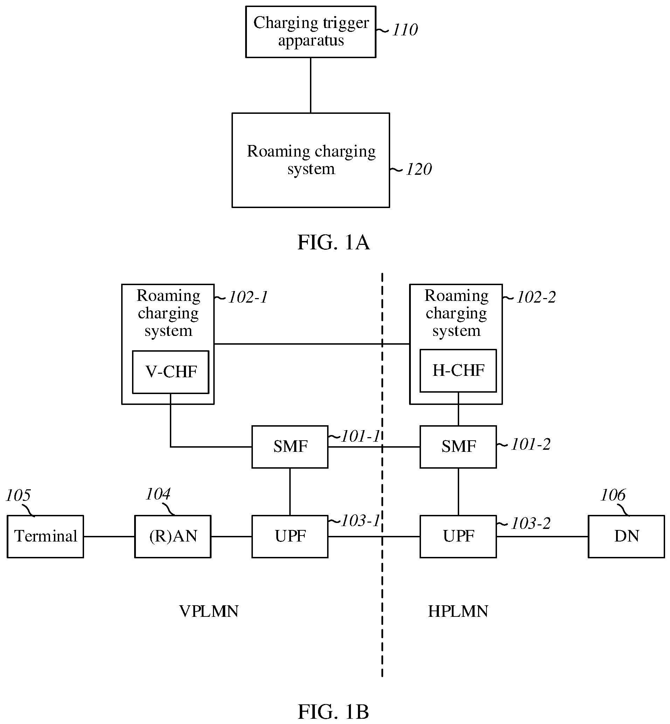

FIG. 1A is a roaming charging system according to an embodiment of this application. The system includes a charging trigger apparatus 110 and a roaming charging system 120. The charging trigger apparatus and the roaming charging system may be network devices in a home network, or the charging trigger apparatus and the roaming charging system may be network devices in a visited network. Interaction in another home form is not limited in this application. The charging trigger apparatus 110 is configured to obtain roaming charging configuration information, update the roaming charging configuration information based on roaming charging configuration update information delivered by the roaming charging system, and generate roaming charging information based on the roaming charging configuration information. The charging trigger apparatus 110 is further configured to send the generated roaming charging information to the roaming charging system 120. The charging trigger apparatus may be a network element in a 5G system architecture. For example, the charging trigger apparatus may be disposed in a session management function SMF in a 5G network, or may be disposed in an access and mobility management function (Access and Mobility Management Function, AMF) in the 5G network. The roaming charging system 120 may be a charging function CHF or a converged charging system (Converged Charging System, CCS) in the 5G network, or another entity that includes a roaming charging data record generation function and a roaming charging processing function. The roaming charging system may alternatively be a charging function CHF or a converged charging system (Converged Charging System, CCS), or another entity that includes a roaming charging data record generation function and a roaming charging processing function. The roaming charging system 120 is configured to: generate a roaming charging data record (Charging Data Record, CDR) based on the roaming charging information sent by the charging trigger apparatus, and generate a detailed data record (Detailed Data Record, DDR) based on the roaming CDR.

In addition, the charging trigger apparatus and the roaming charging system in this application may be not limited to the 5G network architecture, and may be applied to any network architecture and support a scenario in which roaming charging is implemented. Subsequent content of this application is described by using an example in which the charging trigger apparatus is disposed in a session management function in the 5G network architecture, or the charging trigger apparatus is an SMF in the 5G network architecture.

In addition, the charging trigger apparatus and the roaming charging system in this application may be not limited to the 5G network architecture, and may be applied to any network architecture and support a scenario in which roaming charging is implemented. Subsequent content of this application is described by using an example in which the charging trigger apparatus is disposed in a session management function in the 5G network architecture, or the charging trigger apparatus is an SMF in the 5G network architecture. That is, the charging trigger apparatus in FIG. 1A is configured to perform corresponding operations of a session management function in a visited network in FIG. 1B to FIG. 5. The roaming charging system in FIG. 1A is configured to perform corresponding operations of a roaming charging system (which includes a V-CHF) in a visited network or a roaming charging system (which includes an H-CHF) in a home network in FIG. 1B to FIG. 5.

FIG. 1B is a schematic diagram of a structure of a network for implementing roaming in an HR roaming scenario according to an embodiment of this application. The network structure includes a home public land mobile network (home Public Land Mobile Network, HPLMN) and a visited public land mobile network (visited Public Land Mobile Network, VPLMN). The home public land mobile network is a home network for short, and the visited public land mobile network is a visited network for short. In a scenario shown in FIG. 1B, a UPF 103-1 in the visited network is interconnected with a UPF 103-2 in the home network, and sends, to the UPF 103-2 in the home network, an uplink service data flow for accessing the visited network by a user, or receives a downlink service data flow of the user from the UPF 103-2. An SMF 101-1 in the visited network generates roaming charging information based on information (for example, volume information or time information) that is sent by the UPF 103-1 in the visited network and that is of the service data flow used by the user for accessing the visited network, and sends the roaming charging information to an included roaming charging system (which includes a charging function V-CHF in the visited network). An SMF 101-2 in the home network generates roaming charging information based on information that is sent by the UPF 103-2 in the home network and that is of the service data flow used by the user for accessing the visited network, and sends the roaming charging information to a roaming charging system (which includes a charging function H-CHF in the home network). The roaming charging system including the charging function V-CHF in the visited network and the roaming charging system including the charging function H-CHF in the home network are configured to perform processing based on the roaming charging information, of the user, that is sent by the SMF in the respective networks, for example, generate roaming charging data records of the user in a roaming scenario. The roaming charging system 102-1 in the visited network may be a V-CHF or include a V-CHF. The roaming charging system 102-2 in the home network may be an H-CHF or include an H-CHF. The roaming charging system 102-1 in the visited network generates a DDR based on a roaming CDR, of the user, that is generated by the V-CHF, and generates a usage data report (Usage Data Report, UDR) based on the DDR of the user. The roaming charging system 102-2 in the home network generates a roaming DDR based on a roaming CDR, of the user, that is generated by the H-CHF, and generates a usage data report based on the DDR, of the user, that is generated by the H-CHF.

The SMF 101-1 in the visited network is interconnected with the SMF 101-2 in the home network, to establish a PDU session for the user and update roaming charging configuration information of the user. For example, the SMF 101-1 in the visited network sends the roaming charging configuration information of the user to the SMF 101-2 in the home network, and obtains updated roaming charging configuration information of the user from the SMF 101-2 in the home network. The roaming charging system 102-1 in the visited network is interconnected with the roaming charging system 102-2 in the home network, and exchanges the UDRs, of the user, that are generated by the roaming charging system 102-1 and the roaming charging system 102-2, to perform fee settlement.

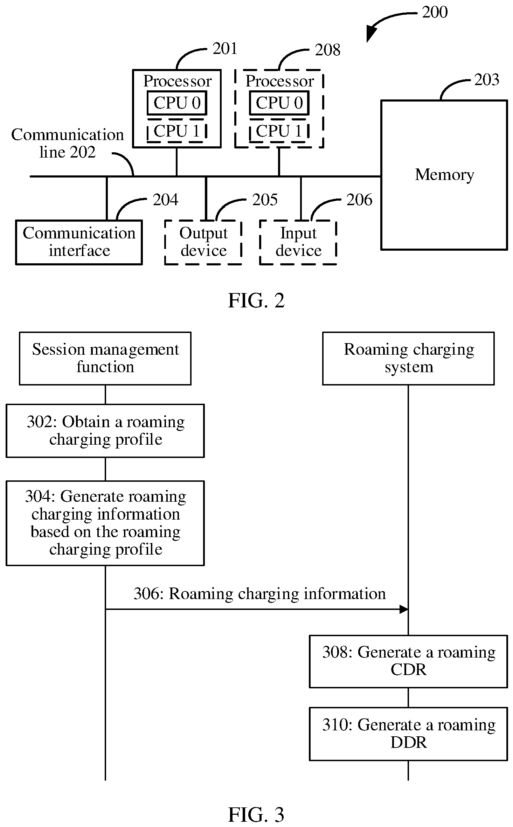

FIG. 2 is a schematic diagram of a hardware structure of a communication device according to an embodiment of this application. The communication device 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control program execution in the solutions in this application.

The communication line 202 may include a path on which information is transferred between the foregoing components.

The communication interface 204 uses any apparatus such as a transceiver, and is configured to communicate with another device or a communication network, for example, an Ethernet.

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, an optical disc storage (which includes a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer, but is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement the charging method provided in the following embodiments of this application.

Optionally, the computer-executable instructions in embodiments of this application may also be referred to as application program code. This is not specifically limited in embodiments of this application.

During specific implementation, in an embodiment, the processor 201 may include one or more CPUs.

During specific implementation, in an embodiment, the communication device 200 may include a plurality of processors, for example, the processor 201 and a processor 208 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

The communication device shown in FIG. 2 may be an SMF or a roaming charging system in embodiments of this application.

The following specifically describes a session establishment method provided in embodiments of this application with reference to FIG. 1A, FIG. 1B, and FIG. 2.

FIG. 3 is a schematic flowchart of a charging method performed in a roaming scenario according to an embodiment of this application. In this embodiment, roaming may be roaming based on an HR scenario, or may be roaming based on an LBO scenario.

In this embodiment of this application, before step 302 is performed, the method may further include: A PCF sends a policy control and charging rule (policy control and charging rule, PCC rule) for a PDU session to an SMF. The PCC rule includes a rating group (rating group, RG) and information of a service data flow corresponding to the rating group, or the PCC rule includes a service identifier and information of a service data flow corresponding to the service identifier, or the PCC rule includes a rating group, a service identifier, and information of a service data flow corresponding to the rating group.

The PCF may be a PCF (namely, a V-PCF) in a visited network. After determining that a user is a roaming user, the V-PCF generates a PCC rule for a session (for example, the PDU session) of the roaming user based on a roaming protocol. In another optional manner, after the V-PCF determines that the user is the roaming user, the V-PCF may obtain a charging policy parameter of the roaming user from a PCF (namely, an H-PCF) in a home network, and generate the PCC rule for the session of the roaming user based on the obtained charging policy parameter of the roaming user. The charging policy parameter of the roaming user includes: the rating group, the service identifier, and/or the information of the service data flow corresponding to the rating group.

A technology that the V-PCF determines that the user is the roaming user is the conventional technology. Details are not described in this embodiment of this application.

It should be noted that the PCF may not send, to the SMF, the rating group (rating group, RG) and the information of the service data flow corresponding to the rating group, or the PCC rule does not include the service identifier and the information of the service data flow corresponding to the service identifier.

Step 302: The SMF obtains roaming charging configuration information (Roaming Charging Profile) corresponding to the roaming user.

The SMF may be a V-SMF, or may be an H-SMF. The following uses an example in which the SMF is a V-SMF and a roaming charging system is a V-CHF for description. The roaming charging configuration information is also referred to as the roaming charging profile.

The SMF determines that the user is the roaming user. Specifically, the SMF determines, based on a home network identifier (namely, a home PLMN identifier) of the user and a network identifier of the SMF (namely, a home PLMN identifier of the SMF) that are reported by user equipment, that the user equipment is roaming user equipment if the home network identifier of the user is different from the network identifier of the SMF.

The SMF obtains the roaming charging configuration information in the following manners:
Manner 1: The roaming charging configuration information of the user in the visited network is configured on the SMF, and the SMF obtains, based on the configured roaming charging configuration information, the roaming charging profile corresponding to the roaming user.
Manner 2: The SMF receives the roaming charging profile that is sent by a roaming charging configuration information update function in the visited network or the home network, to obtain the roaming charging profile corresponding to the roaming user. The roaming charging configuration information update function may be a charging function (V-CHF) in the visited network or a charging function (H-CHF) in the home network, or may be another function that can update the charging configuration information.

The roaming charging profile includes one or more parameters in the following roaming parameter list:
1. Roaming charging information level indication: The roaming charging information level indication indicates an obtained roaming charging information level. The roaming charging information level may be an indication at a quality of service flow (QoS flow) level, an indication at a service (service) level, or an indication at a PDU session level. The indication is, for example, the "roaming charging info level" parameter in Table 1. Table 1 shows only that the roaming charging information level is the indication at the service level. The roaming charging profile further includes information of triggers corresponding to different roaming charging information levels. The information of the trigger includes: a trigger type (trigger type), a trigger category (trigger category), and/or a limit (limit) of a specific trigger.
   If the roaming charging information level indication is the indication at the service level, the roaming charging profile may further include service information. The service information includes a rating group of a service, a service identifier of the service, a service type of the service, and/or other information of the service. The service information is for indicating to collect roaming charging information of the service corresponding to the service type, roaming charging information of the service corresponding to the rating group, and roaming charging information of the service corresponding to the service identifier, or the service information is for indicating to collect roaming charging information of the service corresponding to the service type, the rating group, and the service identifier. If the roaming charging information level indication is the indication at the service level, and the roaming charging configuration information does not include the information of the service, the roaming charging information is separately collected for services corresponding to all rating groups. The rating group is a rating group identifier corresponding to the service in the PDU session, the service identifier is a service identifier corresponding to the service in the PDU session, the service type is a service type corresponding to the service in the PDU session, and other information of the service is an identification rule (namely, flow feature information) of a service data flow corresponding to the service. For the information of the service, refer to information included in service info in Table 1. For example, service info in Table 1 includes the rating group (rating group), the service ID (service identifier), the service type (service type), and the flow information (flow feature). During implementation, if the SMF may obtain, in another manner, a flow feature corresponding to the rating group or the service identifier (for example, may obtain by using the PCC rule delivered by the PCF, where if the PCF is a vPCF, after determining that the user is the roaming user, the V-PCF may obtain the rating group/service identifier of the roaming user and corresponding flow feature information from the PCF in the home network, and include the flow feature corresponding to the rating group or the service identifier in the generated PCC rule of the roaming user), the roaming parameter does not include the flow feature information.
2. Roaming multiple user plane function UPF reporting indication: The indication information is for indicating whether charging information reported by the UPFs needs to be separately written into the roaming charging information when the PDU session uses the plurality of UPFs (refer to perUPF in Table 1). For example, the indication information is for indicating that the roaming charging information includes the charging information reported by each user plane function of the PDU session, or includes charging information obtained by combining charging information reported by a plurality of UPFs of the PDU session.
3. Roaming multiple access PDU session reporting indication: If the PDU session is a multiple access PDU session (MA PDU SESSION, where for example, one PDU session has a plurality of access technologies at the same time, for example, a same PDU session uses both a 3GPP access and a non-3GPP access), multiple PDU session roaming charging indication information may be further carried (refer to maPDUSupport in Table 1). The indication information is for indicating whether the roaming charging information separately carries charging information in each access manner, or carries charging information obtained by combining charging information corresponding to a plurality of accesses in the PDU session.
4. Roaming charging information reporting condition: The roaming charging information reporting condition indicates a reporting condition (for example, a reporting time point, refer to ReportTime in Table 1) for the SMF to report the roaming charging information to the roaming charging system, to ensure that the roaming charging information may be accurately segmented when a DDR is generated. For example, if roaming settlement needs to be performed by day, it may be specified that reporting is performed at 24:00 every day. If roaming settlement needs to be performed by month, it may be specified that reporting is performed at 24:00 on the last day of each month.

Parameters included in the roaming profile may be shown in Table 1:

**Table 1**

| Roaming charging profile | | | Roaming charging configuration information of the PDU session |
|---|---|---|---|
| | Trigger | | Trigger condition for reporting roaming charging information corresponding to a QoS flow |
| | | Trigger type | Type of the trigger condition |
| | | Trigger category | Category of the trigger condition, for example, immediate reporting or delayed reporting |
| | | Time limit | Specify a specific value of the time limit when the trigger is of the "time limit" type |
| | | Volume limit | Specify a specific value of the volume limit when the trigger is of the "volume limit" type |
| Roaming charging info level | | | Roaming charging information level, where a value the roaming charging information level is, for example, a QoS flow level/service level/PDU session level (which separately indicates that the roaming charging information is QoS flow information, service information, or PDU session information) |
| | Service info | | Specify roaming charging configuration information of one service when the roaming charging information level is the service level. The service is identified by an RG and/or a service ID |
| | | Rating group | Rating group |
| | | Service ID | Service identifier |
| | | Service type | Service type, for example, an edge application and a low-latency and high-reliability application |
| | | Flow information | Flow feature of the service identified by an RG and/or a service ID |
| | perUPF | | Whether to perform reporting per UPF |
| | maPDUSupport | | Multiple access PDU session, and whether to perform reporting per access |
| | ReportTime | | Specified reporting time point (for example, 24:00 on the last day of each month) |

Refer to Table 1. Table 1 is an example of the roaming charging configuration information. The roaming charging configuration information shown in Table 1 includes information of the trigger (trigger), and is for indicating to report, to the roaming charging system, the indication at the service level, the indication at the quality of service flow (QoS Flow) level, or the indication at the PDU session level in the example shown in Table 1. Parameters included in the information of the trigger shown in Table 1 are the trigger type, the trigger category, the time limit, and/or the volume limit. For meanings of the parameters included in the information of the trigger, refer to explanations of the corresponding parameters in Table 1.

The roaming charging configuration information shown in Table 1 may further include the roaming charging information level indication (Roaming charging infor level). The roaming charging information level indication may be the indication at the quality of service flow (QoS Flow) level, the indication at the service level, or the indication at the protocol data unit session level. In this example, the roaming charging information level indication parameter is an explicit indication. In another implementation, the roaming charging information level indication may alternatively be an implicit indication. For example, if the roaming charging profile does not carry the roaming charging info level parameter, but the roaming charging profile directly carries the roaming charging configuration information parameter (for example, service info in Table 1) at a service level, it indicates that the roaming charging information level is a service-based level.

The roaming charging configuration information shown in Table 1 may further include a roaming charging configuration information parameter (Service Info) parameter group at a service level. The service info group parameter may be independent of the roaming charging information level indication (Roaming charging infor level), or may be used as a value of the roaming charging information level indication (Roaming charging infor level). That is, the service info group parameter in Table 1 may be parallel with the roaming charging infor level parameter, or may be combined with the roaming charging infor level parameter (that is, the roaming charging infor level parameter includes the service info parameter). When the service information (Service Info) is used as the value of the roaming charging information level indication (Roaming charging infor level), it indicates that the roaming charging information level is the service-based level. The service information (Service Info) in Table 1 may include the rating group (rating group), the service identifier (service ID), the service type, and/or the flow information. The rating group (rating group) and/or the service identifier (service ID) are/is for identifying a service, and the service type is for identifying a type of services. The flow information is for identifying the flow feature of the service data flow of the service. For example, if the service information (Service Info) only includes the rating group parameter or the service ID parameter, the roaming charging configuration information in Table 1 is the roaming charging configuration information of the service, of the user, that is identified by the rating group or the service ID. If the service information (Service Info) includes the rating group parameter or the service ID parameter, and also includes the flow information, the flow feature in the flow information parameter is the flow feature of the service identified by the rating group parameter or the service ID parameter.

The roaming charging configuration information shown in Table 1 may further include the per UPF parameter, indicating whether charging information reported by the UPFs is separately reported to the roaming charging system, or charging information reported by the UPFs is combined and then reported to the roaming charging system when the PDU session of the user uses the plurality of UPFs.

The roaming charging configuration information shown in Table 1 may further include two parameters: a multiple access reporting indication and a roaming charging information reporting condition. For descriptions of the two parameters, refer to descriptions of the foregoing parameter 6 or 7. Details are not described in this embodiment of this application.

Step 304: The SMF generates the roaming charging information based on the roaming charging configuration information.

The SMF may be a V-SMF, or may be an H-SMF. The following uses an example in which the SMF is a V-SMF.

Usually, in a home routed (Home Routed, HR) roaming architecture (that is, a service data flow accessed by the user in the visited network needs to be routed through a home UPF), both the V-SMF and the H-SMF may generate the roaming charging information based on the roaming charging configuration information.

The SMF determines, based on the roaming charging configuration information, the roaming charging information that needs to be generated, and generates the roaming charging information for the PDU session. The roaming charging information herein is to-be-reported charging information generated based on the collected charging information.

A specific method for the SMF to determine the generated roaming charging information is as follows:
If the SMF determines that the roaming charging information level (Roaming charging info level) indication in the roaming charging configuration information is the indication at the QoS flow level, the SMF determines to obtain charging information corresponding to the QoS flow, and writes the charging information corresponding to the QoS flow into the roaming charging information. When the trigger (trigger) corresponding to the QoS flow is met, the SMF writes the charging information of the QoS flow into the roaming charging information. The charging information, of the QoS flow, that is written into the roaming charging information includes a QoS flow identifier, an uplink/downlink service data flow volume corresponding to the QoS flow, and the like.

If the SMF determines that the roaming charging information level (Roaming charging info level) indication in the roaming charging configuration information is the indication at the service level (namely, a service level), the SMF determines to obtain charging information of the service, and writes the charging information of the service into the roaming charging information. When the trigger corresponding to the service is met, the SMF writes the charging information of the service into the roaming charging information. Specifically, if the roaming profile further includes service info, the SMF generates the roaming charging information based on the rating group and/or the service identifier or the service type carried in service info (that is, separately writes usage corresponding to the rating group, the service identifier, or the service type into the roaming charging information, where the roaming charging information includes the usage corresponding to the rating group, the service identifier, or the service type). The usage corresponding to the service type may be time corresponding to the service type, or a value of an uplink volume/a downlink volume corresponding to the service type. If the roaming profile does not include service info, the SMF generates the roaming charging information for all rating groups in the PDU session (that is, writes usage (which may be an uplink/downlink volume or uplink/downlink time) corresponding to each rating group into the roaming charging information). That is, if the roaming profile does not include service info, the roaming charging information includes the usage corresponding to each rating group. In another optional implementation, when writing the charging information of the service into the roaming charging information, the SMF also writes the charging information of the QoS flow corresponding to the service into the roaming charging information.

If the SMF determines that the roaming charging information level (Roaming charging info level) indication in the roaming charging configuration information is the indication at the PDU session level, the SMF determines that charging information of the PDU session needs to be obtained, and writes the charging information of the PDU session into the roaming charging information. The roaming charging information includes a total uplink/downlink volume of the PDU session (does not differentiate between services or QoS flows).

If the SMF is a V-SMF, and it is determined that the SMF has a home network slice identifier, the SMF obtains a network slice identifier, of the home network, that corresponds to a slice in which the PDU session is located, and writes the obtained network slice identifier of the home network into the roaming charging information.

If the value of the multiple UPF reporting indication included in the roaming charging configuration information in the roaming scenario is reporting per UPF, the SMF separately writes, into the roaming charging information based on the multiple UPF reporting indication, charging information reported by the UPFs (for example, for a same rating group, if a UPF 1 reports 50 M, and a UPF 2 reports 100 M, the roaming charging information separately carries the volume 50 M of the UPF 1 and the volume 100 M of the UPF 2). If the roaming charging configuration information does not include the multiple UPF reporting indication, the SMF summarizes charging information on the plurality of UPFs and writes summarized charging information into the roaming charging information (for example, for a same rating group, if a UPF 1 reports 50 M, and a UPF 2 reports 100 M, a volume corresponding to the rating group is summarized as 150 M).

If the roaming charging configuration information includes the multiple access PDU session (MA PDU session) reporting indication, the SMF collects charging information in a differentiated access manner of the multiple access PDU session reporting indication, and separately writes, into the roaming charging information, charging information, of the PDU session, that corresponds to each access manner (for example, content written into the roaming charging information is as follows: 50 M is used for the 3GPP access, and 100 M is used for the non-3GPP access). If the roaming charging configuration information does not include the multiple access PDU session reporting indication, the SMF summarizes charging information corresponding to each access manner, and writes summarized charging information into the roaming charging information (for example, if 50 M is used for the 3GPP access, and 100 M is used for the non-3GPP access, a total of 150 M is written into the roaming charging information).

The SMF may also obtain other information (for example, an SMF address and a RAT type) of the PDU session, and write the information into the roaming charging information.

If the roaming charging configuration information includes the roaming charging information reporting condition, the SMF generates the roaming charging information and reports the roaming charging information to the roaming charging system when the reporting condition specified by the roaming charging information reporting condition is met.

The roaming charging information generated by the V-SMF includes the charging information of the service and the charging information of the corresponding QoS flow. An example is shown in Table 2:

**Table 2**

| PDU session charging information | | | PDU session charging information |
|---|---|---|---|
| | | HPLMN network slice ID | Network slice identifier of the home network of the PDU session |
| Roaming QBC information | | | Roaming charging information (which includes the charging information of the service flow and the charging information of the QoS flow corresponding to the service) |
| | UPF ID | | Charging information of the service and UPF identifier corresponding to the charging information of the corresponding QoS flow. If there is the UPF identifier, the following parameters are parameters corresponding to the UPF identifier |
| | Multiple QFI container | | Charging information of one or more QoS flows in the PDU session. Each QFI container includes related information of one QoS flow, for example, a trigger (trigger), trigger effective time (trigger timestamp), corresponding usage time (time), and/or corresponding volume usage information, charging information of one or more services corresponding to the QFI, and detailed information of the QFI container |
| | | Trigger | Trigger that triggers reporting of the charging information of the QoS flow and the service |
| | | Trigger timestamp | Time point at which the trigger is met |
| | | Time | Time (time of using the QoS flow) |
| | | Total volume | Total volume (total volume of using the data flow of the QoS flow) |
| | | Uplink volume | Uplink volume (uplink volume of using the data flow of the QoS flow) |
| | | Downlink volume | Downlink volume (downlink volume of using the data flow of the QoS flow) |
| | | Local sequence number | Sequence number of the QFI container |
| | | Multiple service container | Charging information of one or more services in the QoS flow. Each service container includes charging information of one service corresponding to the QoS flow. For example, the charging information of each service includes rating group information, a service identifier, a service type, a trigger corresponding to the corresponding service, a volume generated by the corresponding service, time of the corresponding service, and/or the like |
| | | Rating group | Rating group corresponding to the service |
| | | Service identifier | Service identifier corresponding to the service |
| | | Service type | Service type corresponding to the service |
| | | Trigger | Trigger the trigger that generates the charging information of the service |
| | | Trigger timestamp | Time point at which the trigger is met |
| | | Time | Time (time of using the service) |
| | | Total volume | Total volume (total volume of using the service) |
| | | Uplink volume | Uplink volume (uplink volume of using the service) |
| | | Down volume | Downlink volume (downlink volume of using the service) |
| | | Local sequence number | Sequence number of the service container |
| | QFI container information | | Detailed information of the QFI container |
| | | QoS flow ID | QoS flow identifier |
| | | Time of first usage | QoS start time of the QoS flow in this current reporting period |
| | | Time of last usage | QoS end time of the QoS flow in this current reporting period |
| | | QoS information | QoS information of the QoS flow |
| | | User location information | User location information of the QoS flow in this current reporting period |
| | | UE time zone | Time zone in which the user is located of the QoS flow in this current reporting period |
| | | RAT type | Access type of the QoS flow in this current reporting period |

Refer to Table 2. Table 2 is an example in which the roaming charging information generated based on information reported by one UPF includes the roaming charging information of the QoS flow and the roaming charging information of the service. The roaming charging information shown in Table 2 shows an example of one QoS flow (which corresponds to one QFI container instance) in the PDU session. If the PDU session includes a plurality of QFI containers, each QFI container includes one or more lower-layer parameters of the multiple QFI container in Table 2.

In Table 2, one multiple QFI container parameter includes one piece of QFI container information, which indicates detailed information of one QFI container. That is, one multiple QFI container corresponds to related information of one QoS flow. The trigger (trigger) at a lower layer of the multiple QFI container in Table 2 is a trigger corresponding to the QoS flow. The trigger effective time (trigger timestamp) is effective time of the trigger corresponding to the QoS flow. The usage time (time) is usage time corresponding to the QoS flow. The volume usage information and the like are the used volume corresponding to the QoS flow. The time, the total volume, the uplink volume, and/or the downlink volume in Table 2 are/is the usage of the QoS flow.

In Table 2, one QoS flow may correspond to one or more service data flows (Services). One service data flow is represented by one multiple service container. Table 2 shows one service container (Multiple service container). One multiple service container parameter indicates information of one service data flow. One multiple service container includes a rating group, which indicates the rating group corresponding to the service. The service identifier indicates the service identifier corresponding to the service. The trigger indicates the trigger that generates the charging information of the service. The time, the total volume, the uplink volume, and/or the downlink volume are/is the usage of the service.

In Table 2, one piece of QFI container information indicates detailed information of one QFI container. One piece of QFI container information includes one or more parameters of the following information, for example, the QoS flow ID, the time of first usage, the time of last usage, the QoS information, the user location information, the UE time zone, and/or the RAT type. For meanings of the parameters included in the QFI container information, refer to the explanation column in Table 2.

If the roaming charging configuration information includes the multiple UPF reporting indication, and one PDU session has a plurality of UPFs, the V-SMF generates, for each UPF, one piece of roaming QBC information (which includes the lower-layer parameter) in Table 2.

The roaming charging information generated by the V-SMF includes the charging information of the service, but does not include the charging information of the QoS flow. An example is shown in Table 3:

**Table 3**

| PDU session charging information | | | PDU session charging information |
|---|---|---|---|
| | | HPLMN network slice ID | Network slice identifier of the home network of the PDU session |
| Roaming information | | | Roaming charging information |
| | UPF ID | | UPF identifier. If there is the UPF identifier, the following parameters are parameters corresponding to the UPF identifier |
| | Multiple service container | | Charging information of the service. Each service container includes the charging information of the service, for example, rating group information, a service identifier, a trigger, a service identifier, a volume, and time. |
| | | Rating group | Rating group corresponding to the service |
| | | Service identifier | Service identifier corresponding to the service |
| | | Trigger | Trigger the trigger that generates the charging information of the service |
| | | Trigger timestamp | Time point at which the trigger is met |
| | | Time | Time (time of using the service) |
| | | Total volume | Total volume (total volume of using the service) |
| | | Uplink volume | Uplink volume (uplink volume of using the service) |
| | | Down volume | Downlink volume (downlink volume of using the service) |
| | | Local sequence number | Sequence number of the service container |

Refer to Table 3. Table 3 is the roaming charging information generated by the V-SMF based on information reported by one UPF. The roaming charging information includes an example of the roaming charging information of the service. In Table 3, one multiple service container indicates charging information of one service data flow. For parameters included in one multiple service container, refer to corresponding descriptions in Table 2. If one PDU session has a plurality of service data flows, the roaming charging information for the PDU session may include a plurality of multiple service containers, each multiple service container corresponds to one service, and the parameters include one or more lower-layer parameters of the multiple service container in Table 3.

If the roaming charging configuration information includes the multiple UPF reporting indication, and one PDU session has a plurality of UPFs, the V-SMF generates, for each UPF, one piece of roaming information (which includes the lower-layer parameter) in Table 3.

The roaming charging information generated by the V-SMF includes charging information at a PDU session level. An example is shown in Table 4:

**Table 4**

| PDU session charging information | | | PDU session charging information |
|---|---|---|---|
| | | HPLMN network slice ID | Network slice identifier of the home network of the PDU session |
| Roaming information | | | Roaming charging information reported by one or more UPFs |
| | UPF ID | | UPF identifier. If there is the UPF identifier, the following parameters are parameters corresponding to the UPF identifier |
| | Trigger | | Trigger the trigger that generates the charging information for the PDU session |
| | Trigger timestamp | | Time point at which the trigger is met |
| | Time | | Time (time of using the PDU session) |
| | Total volume | | Total volume (total volume of using the data flow of the PDU session) |
| | Uplink volume | | Uplink volume (uplink volume of using the data flow of the PDU session) |
| | Downlink volume | | Downlink volume (downlink volume of using the data flow of the PDU session) |

Refer to Table 4. Table 4 is an example of the roaming charging information at a PDU session level. If the roaming charging configuration information includes the multiple UPF reporting indication, and one PDU session has a plurality of UPFs, the V-SMF generates, for each UPF, roaming charging information including one piece of roaming information (which includes the lower-layer parameter) in Table 4.

For the parameters included in Table 4, refer to corresponding descriptions of the second column in Table 4. Details are not described in this embodiment of this application again.

In the HR roaming scenario, the method and the time for generating the roaming charging information by the H-SMF, and the generated roaming charging information are similar to those of the V-SMF.

Step 306: The SMF reports, to the roaming charging system, the roaming charging information generated in step 304.

Step 308: The roaming charging system generates a roaming charging data record (Charging Data Record, CDR) for the PDU session of the user based on the received roaming charging information, where the roaming CDR includes the roaming charging information.

Step 310: After the roaming charging system determines to generate a detailed data record (detailed data record, DDR), the roaming charging system generates the DDR based on a roaming agreement, the roaming charging profile, and the roaming CDR.

The method for determining, by the roaming charging system, to generate the detailed data record may be as follows: The roaming charging system generates the DDR based on a time point or a time period specified in the roaming agreement.

The method for generating the DDR by the roaming charging system may be as follows:
- The roaming charging system determines a level for generating the DDR. The roaming charging system may determine the level for generating the DDR based on the roaming charging profile, or determine the level for generating the DDR based on the roaming protocol.
- If the roaming charging system determines that the level for generating the DDR is a QoS flow level (that is, writes the charging information of the QoS flow into the DDR), the roaming charging system generates one DDR for each QoS flow, and writes the charging information (for example, a QoS flow identifier and a corresponding volume) of the QoS flow in the CDR of the PDU session into the DDR. If the roaming charging system determines that the level for generating the DDR is a service level (that is, writes charging information of one service flow into the DDR), the roaming charging system generates one DDR for each service, and writes, into the DDR, the charging information (for example, a rating group and a corresponding volume) of the service in the CDR of the PDU session or combined charging information of the charging information of the service and charging information of a QoS flow corresponding to the service. Alternatively, if the roaming charging system determines that the level for generating the DDR is a PDU session level (that is, writes the charging information of the PDU session into the DDR), the roaming charging system generates one DDR for each PDU session, and writes the charging information (for example, a total volume of the PDU session) of the PDU session in the CDR of the PDU session into the DDR.
- The roaming charging system may further write related information (for example, a PDU session identifier and a PDU address) of the PDU session in the CDR of the PDU session into the DDR of the user.
- The roaming charging system may further write the network slice identifier of the PDU in the CDR of the PDU session into the DDR of the user. Specifically, if the roaming charging system may obtain the network slice identifier of the slice in the home network from the CDR of the PDU session, the network slice identifier of the home network is written into the DDR of the user.

For specific examples of some of parameters included in the roaming DDR, refer to Table 5.

For some information included in the DDR generated by the roaming charging system, refer to Table 5:

**Table 5**

| Field name | Description |
|---|---|
| Duration | Duration, corresponding to the duration in the charging information of the QoS flow or the charging information of the service |
| Data volume incoming | Downlink volume, corresponding to the downlink volume in the charging information of the QoS flow or the service |
| Data volume outgoing | Uplink volume, corresponding to the uplink volume in the charging information of the QoS flow or the service |
| RAT | Access type, corresponding to the access type in the charging information of the QoS flow or the charging information of the service |
| QCI | QoS class identifier, corresponding to the QCI in the QoS information in the charging information of the QoS flow or the charging information of the service. |
| | If the PDU session level is used, the information is not included. |
| RGID | Rating group, corresponding to the rating group in the charging information of the service. The duration, data volume incoming, and data volume outgoing are values corresponding to the rating group. |
| | If the PDU session level or the QoS flow level is used, the information is not included. |
| Service identifier | Service identifier, corresponding to the service identifier in the charging information of the service. The duration, data volume incoming, and data volume outgoing are values corresponding to the service identifier. |
| | If the PDU session level or the QoS flow level is used, the information is not included. |
| Service type | Service type, corresponding to the service type in the charging information of the service. The duration, data volume incoming, and data volume outgoing are values corresponding to the service type. |
| | If the DDR is generated for the PDU session level, the information is not included. |
| QoS flow ID | QoS flow identifier, corresponding to the QoS flow identifier in the charging information of the QoS flow. The duration, data volume incoming, and data volume outgoing are values corresponding to the QoS flow or the service in the QoS flow. |
| | If the DDR is generated for the PDU session level, the information is not included. |
| Network slice info | Slice identifier. If an H-network slice identifier of the PDU session is provided in the CDR, the H-network slice identifier is written into herein, or a V-network slice identifier is included herein. |
| UPF ID | UPF identifier. When the PDU session has a plurality of UPFs, the UPF ID indicates an identifier of one UPF. The duration, data volume incoming, and data volume outgoing are values corresponding to the UPF identifier. |
| MAPDUSEssion | Identifier of one access type in a case of a plurality of accesses. The duration, data volume incoming, and data volume outgoing are values corresponding to the access type. |

Refer to Table 5. If the roaming charging configuration information includes the multiple UPF reporting indication, and one PDU session has a plurality of UPFs, a DDR record that includes some parameters shown in Table 5 is generated for each UPF. If the roaming charging configuration information includes the multiple access reporting indication, and one PDU session has a plurality of access types, the roaming charging system generates, for each access type, one DDR record that includes some parameters shown in Table 5.

According to this method, the session management function obtains the roaming charging information level, the information of the service data flow, the multiple UPF reporting indication, the multiple access reporting indication, and the roaming charging information reporting condition in the roaming charging profile, so that roaming charging information that supports a plurality of settlement requirements may be generated based on the roaming charging profile. In this way, the roaming charging system may perform flexible roaming settlement based on different roaming charging configuration information, and provide data support for conflict resolution when a conflict occurs.

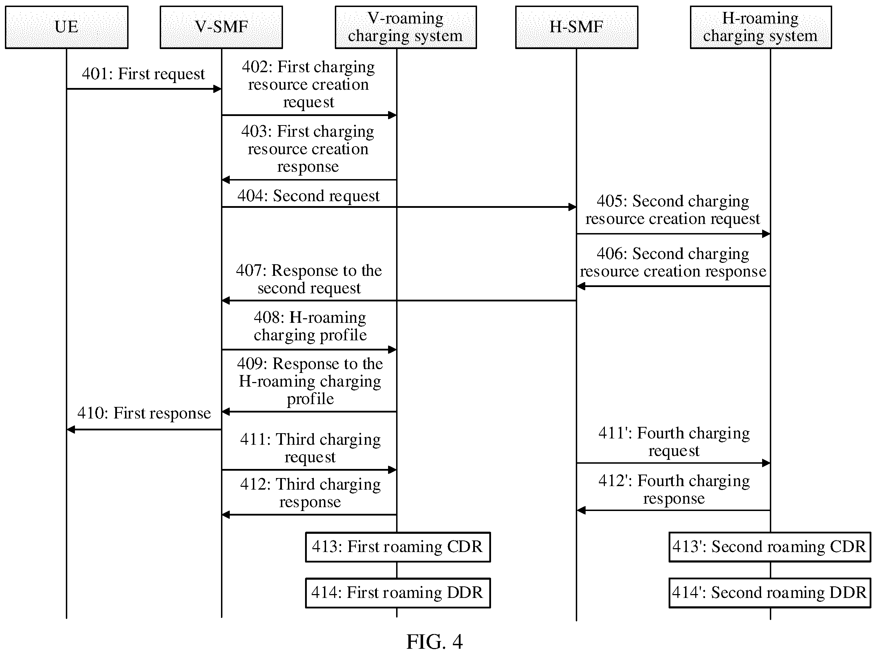

FIG. 4 is a schematic flowchart of a charging method based on an HR roaming scenario according to an embodiment of this application. In this embodiment, with reference to FIG. 1B, the roaming charging method includes the following steps.

Step 401: User equipment (user equipment, UE) sends a first request for a PDU session to a V-SMF, to request to establish the PDU session for a user. The first request carries user information.

Step 402: After receiving the first request, the V-SMF determines, based on the user information carried in the first request, that the UE is roaming-in UE, obtains a roaming charging profile applicable to a PDU session of the UE, and sends a first charging resource creation request to a V-roaming charging system, where the first charging resource creation request includes the roaming charging profile applicable to the PDU session of the UE. Specifically, the V-SMF obtains roaming charging configuration information configured in the V-SMF. For detailed information included in the roaming charging configuration information, refer to step 302. Details are not described again in this embodiment of this application.

The first charging resource creation request is used to request a V-CHF to generate a charging resource for the PDU session of the user, to process roaming charging information that is of the PDU session of the UE and that is reported by the V-SMF.

Step 403: After receiving the first charging resource creation request, the V-CHF creates a first charging resource (including allocating a charging resource identifier) for the PDU session based on the first charging resource creation request, and returns a first charging resource creation response to the V-SMF.

The V-CHF determines, based on the roaming charging profile that is reported by the V-SMF and that is used for the PDU session of the UE, whether to update roaming charging configuration information used for the PDU session of the UE. If the roaming charging configuration information used for the PDU session of the UE is updated, the V-CHF generates roaming charging profile update information used for the UE. Specifically, the V-CHF may determine, based on a roaming protocol, whether to update the roaming charging profile used for the PDU session of the UE. For example, if the roaming protocol specifies that new protocol content starts in a new quarter, the V-CHF determines, based on this, that an original roaming profile needs to be updated at the beginning of the quarter.

The first charging resource creation response includes update information of the roaming charging configuration information used for the UE provided by the V-HF. For descriptions of information included in the update information of the roaming charging configuration information, refer to step 304. The update information of the roaming charging configuration information is used to update the configured roaming charging configuration information obtained by the V-SMF in step 402. A roaming charging profile included in the first charging resource creation response may include only one or more parameters that need to be updated in the roaming charging configuration information, or may include all information of the roaming charging configuration information.

Step 404: The V-SMF sends a second request for the PDU session to an H-SMF, to request the H-SMF to complete PDU session establishment. The second request for the PDU session carries information of the PDU session establishment request, and carries the roaming charging profile used by the V-SMF for the PDU session of the user. The roaming charging profile carried in the second request for the PDU session may be a configured roaming charging profile obtained by the V-SMF, or may be a roaming charging profile that is updated by using the roaming charging profile sent by the V-CHF.

The roaming charging profile in step 404 is a roaming charging profile currently used for the PDU session of the user. If the V-CHF does not provide the roaming charging profile update information used for the UE in step 403, the roaming charging profile carried in step 404 is the roaming charging profile configured in the V-SMF. If the V-CHF provides the roaming charging profile update information used for the UE in step 403, the roaming charging profile carried in step 404 is the roaming charging profile updated by the V-CHF.

Step 405: After receiving the second request for the PDU session, the H-SMF sends a second charging resource creation request to an H-CHF. The second charging resource request is used to request the H-CHF to create a charging resource for the PDU session of the user, to process roaming charging information that is of the PDU session of the UE and that is reported by the V-SMF. The second charging resource creation request carries the roaming charging profile sent by the V-SMF. The roaming charging profile carried in the second charging resource creation may be a configured roaming charging profile obtained by the V-SMF, or may be a roaming charging profile that is updated by using the roaming charging profile sent by the V-CHF.

Step 406: After receiving the second charging resource creation request, the H-CHF creates (create) a second charging resource (including allocating an identifier to the second charging resource) for the PDU session based on the second charging resource creation request, and returns a second charging resource creation response to the H-SMF.

After receiving the second charging resource creation request, the H-CHF determines, based on the roaming charging profile that is reported by the H-SMF and that is used for the PDU session of the UE, whether to update the roaming charging profile used for the PDU session of the UE. For example, the H-CHF may determine, based on a roaming protocol, a user subscription change, and/or a requirement in a new settlement scenario, whether to update the roaming profile used for the PDU session of the UE. For example, if monthly settlement needs to be adjusted to weekly settlement, for another example, if the H-CHF provides service information (for example, a rating group of the service) based on the roaming protocol requirement, the H-CHF determines that the roaming profile used for the PDU session of the UE needs to be updated. If the H-CHF determines to update the roaming charging profile used for the PDU session of the UE, the H-CHF generates a roaming charging profile (H-profile for short) of a home network. For descriptions of information included in the H-profile, refer to step 304. The roaming charging profile of the home network is provided for the V-SMF to update information of the roaming charging profile that is provided by the V-SMF for the H-SMF in step 404 or step 405 and that is used for the PDU session of the user. The information of the roaming charging profile that is provided for the H-SMF and that is used for the PDU session of the user is the configured roaming charging profile obtained by the V-SMF (where a roaming charging system of a visited network has not been updated) or a roaming charging profile updated by the roaming charging system of the visited network.

The second charging resource creation response includes the roaming charging profile of the home network and the identifier of the second charging resource. The H-profile included in the second charging resource creation response may include only one or more parameters that need to be updated, or may include all information of the H-profile.

Step 407: The H-SMF sends a response to the second request for the PDU session to the V-SMF. The response to the second request for the PDU session includes the roaming charging profile of the home network.

Steps 408 and 409: After receiving the response to the second request for the PDU session returned by the H-SMF, if the response to the second request for the PDU session carries the roaming charging profile of the home network, the V-SMF reports the roaming charging profile of the home network to the V-CHF, and receives a response that is returned by the V-CHF and that indicates that the roaming charging profile of the home network is received.

After receiving the response to the second request for the PDU session, the V-SMF updates the roaming charging profile (the configured roaming charging profile or a roaming charging profile that is updated by using a roaming charging profile of the visited network) for the PDU session of the user by using the roaming charging profile of the home network, and generates the roaming charging information of the PDU session based on the updated roaming charging profile.

Further, the V-SMF further generates, based on the updated roaming charging profile, a new policy for reporting charging information of the PDU session of the user, and delivers the new policy for reporting the charging information of the PDU session of the user to a UPF.

Step 410: The V-SMF sends a first response for the PDU session to the UE, to indicate that a first session (for example, the PDU session) of the UE is established.

Steps 411 and 412: When a charging reporting condition is met, the V-SMF obtains usage information (not shown in the figure) of the PDU session of the user from a V-UPF, and generates roaming charging information based on the information reported by the V-UPF. The V-SMF sends a third charging request to the V-roaming charging system, where the third charging request carries the roaming charging information generated by the V-SMF. The V-SMF receives a third charging response returned by the V-CHF.

For the roaming charging information generated by the V-SMF, refer to Table 2 to Table 4 or the descriptions in step 306. Details are not described again in this embodiment of this application.

Step 413: The V-roaming charging system generates a roaming charging data record (Charging Data Record, CDR) for the PDU session of the user based on the received roaming charging information. The roaming CDR includes the roaming charging information.

Step 414: When determining to generate a detailed data record (detailed data record, DDR), the V-roaming charging system generates a detailed data record (detailed data record, DDR) for the user based on the roaming CDR of the PDU session of the user. For descriptions about the generation of the DDR by the V-roaming charging system, refer to the descriptions in step 310. Details are not described again in this embodiment of this application.

For step 411' to step 414', refer to the descriptions in steps 411 to 414. The H-SMF generates roaming charging information based on the usage information of the PDU session reported by the H-UPF. The H-SMF sends the generated roaming charging information to an H-roaming charging system. The H-roaming charging system generates a roaming CDR for the PDU session of the user based on the received roaming charging information. When determining to generate a DDR, the H-roaming charging system generates a DDR of the user based on the roaming CDR for the PDU session of the user.

Subsequently, the V-roaming charging system and the home network roaming charging system summarize charging information based on the generated DDR and roaming protocol, and generate a UDR. Specifically, based on the roaming protocol, the charging information may be summarized based on a user group (for example, usage of a group of users is summarized), the charging information may be summarized based on a service (for example, usage of a same service used by a group of users is summarized), or the like. The usage herein may be traffic.

Then, the V-roaming charging system sends the generated UDR to the home network roaming charging system, and the home network roaming charging system verifies the UDR sent by the V-roaming charging system by using a locally generated UDR.

For details about subsequent conflict resolution and settlement procedures, refer to a BCE procedure defined by GSMA.

In embodiments of this application, division into functional modules may be performed on devices such as the session management function 101 and the roaming charging system 102 based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

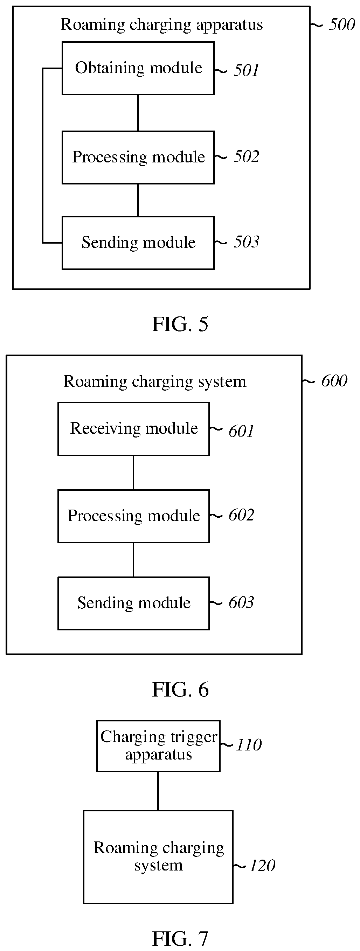

For example, when the functional modules are obtained through division in an integrated manner, FIG. 5 is a schematic diagram of a structure of a roaming charging apparatus (or a charging trigger apparatus) 500. The apparatus 500 may be the session management function 101 in the foregoing embodiments, or may be a chip in the session management function 101. This is not specifically limited in this embodiment of this application. As shown in FIG. 5, the apparatus includes an obtaining module 501, a processing module 502, and a sending module 503.

The obtaining module 501 is configured to obtain roaming charging configuration information after the processing module determines that a user corresponding to a data connection session is a roaming user, where the roaming charging configuration information includes a roaming charging information level indication, service information, a roaming multiple user plane function reporting indication, a roaming multiple access data connection session reporting indication, and/or a roaming charging information reporting condition.

The processing module 502 is configured to generate, through the charging trigger apparatus, roaming charging information of the data connection session based on the roaming charging information level indication, the service information, the roaming multiple user plane function reporting indication, the roaming multiple access data connection session reporting indication, and/or the roaming charging information reporting condition.

The sending module 503 is configured to report the roaming charging information to a roaming charging system.

Optionally, that the processing module 502 determines that a user corresponding to a protocol data unit data connection session is a roaming user includes: The processing module 502 determines, based on a home network identifier, of the user, that is reported by user equipment, that the user is the roaming user.

Optionally, that an obtaining module 501 obtains roaming charging configuration information of a user includes: The obtaining module obtains roaming charging configuration information configured on the charging trigger apparatus as the roaming charging configuration information.

Optionally, that an obtaining module 501 obtains roaming charging configuration information of a user includes: The obtaining module 501 receives roaming charging configuration information sent by the roaming charging system. The obtaining module 501 uses the roaming charging configuration information sent by the roaming charging system as the roaming charging configuration information.

Optionally, the roaming charging information level indication is: an indication at a quality of service flow (QoS Flow) level, an indication at a service level, or an indication at a data connection session level; and
when the roaming charging information level indication is the indication at the QoS flow level, the roaming charging information includes charging information corresponding to the QoS; or
when the roaming charging information level indication is the indication at the service level, the roaming charging information includes charging information corresponding to the service; or
when the roaming charging information level indication is the indication at the data connection session level, the roaming charging information includes charging information corresponding to the data connection session.

Optionally, that the processing module 502 generates roaming charging information of the data connection session includes: When the roaming charging information level indication is the indication at the service level, the charging information corresponding to the service includes usage of a service, in the data connection session, that corresponds to a rating group, or usage of a service, in the data connection session, that corresponds to a service identifier, or usage of a service, in the data connection session, that corresponds to a service type, or usage of a service, in the data connection session, that corresponds to a rating group and a service identifier.

FIG. 6 is a schematic diagram of a structure of a roaming charging system 600. The roaming charging system 600 may be the roaming charging system 102 in the foregoing embodiments, or may be a chip in the roaming charging system 102. This is not specifically limited in this embodiment of this application. As shown in FIG. 6, the apparatus includes a receiving module 601, a processing module 602, and a sending module 603.

The receiving module 601 is configured to receive a charging resource creation request, of a data connection session of a user, that is sent by a charging trigger apparatus, where the charging resource creation request includes data connection session information of the user.

The processing module 602 is configured to generate second roaming charging configuration information, where the second roaming charging configuration information includes a roaming charging information level indication, service information, a roaming multiple user plane function reporting indication, a roaming multiple access data connection session reporting indication, and/or a roaming charging information reporting condition.

The sending module 603 is configured to send the second roaming charging configuration information to the charging trigger apparatus.

The receiving module 601 is further configured to receive roaming charging information sent by the charging trigger apparatus, where the roaming charging information is generated based on the second roaming charging configuration information that is sent by the roaming charging system.

Optionally, the charging resource creation request includes first roaming charging configuration information, the first roaming charging configuration information includes a roaming charging information level indication, service information, a roaming multiple user plane function reporting indication, a roaming multiple access data connection session reporting indication, and/or a roaming charging information reporting condition, and the second roaming charging configuration information is used by the charging trigger apparatus to update the first roaming charging configuration information in the charging trigger apparatus.

Optionally, the processing module 602 is further configured to determine, based on the first roaming charging configuration information carried in the charging resource creation request, to generate the second roaming charging configuration information for updating the first roaming charging configuration information.

Optionally, the processing module 602 is further configured to generate a charging data record (Charging Data Record, CDR) for the user, where the charging data record includes the roaming charging information.

As another optional manner, the modules in FIG. 6 may be further configured to execute the steps executed by the roaming charging system in the method procedures in FIG. 3 and FIG. 4.

In this embodiment, the apparatus 500 is presented in a form of functional modules obtained through division in an integrated manner. The "module" herein may be an application-specific integrated circuit (application-specific integrated circuit, ASIC), a circuit, a processor and a memory that execute one or more software programs or firmware programs, an integrated logic circuit, and/or another component that can provide the foregoing function. In a simple embodiment, a person skilled in the art may figure out that the apparatus 500 may be in the form shown in FIG. 2.

For example, the processor 201 in FIG. 2 may invoke the computer-executable instructions stored in the memory 203, so that the roaming charging system performs the roaming charging method in the foregoing method embodiments.

Specifically, functions/implementation processes of the receiving module 601, the processing module 602, and the sending module 603 in FIG. 6, and the obtaining module 501, the processing module 502, and the sending module 503 in FIG. 5 may be implemented by the processor 201 in FIG. 2 by invoking the computer--executable instructions stored in the memory 203.

Optionally, when the apparatus 600 and/or the apparatus 500 are/is a chip, functions/implementation processes of the modules may alternatively be implemented by using software, a circuit, or the like. Optionally, when the apparatus 600 and/or the apparatus 500 are/is a chip, the memory 203 may be a storage unit in the chip, for example, a register or a cache. Certainly, this is not specifically limited in embodiments of this application.

The apparatuses provided in embodiments of this application may be configured to perform the foregoing charging method. Therefore, for technical effects that can be obtained by the apparatuses, refer to the foregoing method embodiments. Details are not described herein again.

The charging trigger apparatus 600 and/or the roaming charging system 500 may be implemented on an integrated circuit, a radio frequency integrated circuit, a printed circuit board, or the like. In addition, the apparatus may be an independent device, or may be a part of a large device. In embodiments, the charging trigger apparatus 600 and/or the roaming charging system 500 are presented in a form of functional modules obtained through division in an integrated manner. The "module" herein may be a specific ASIC, a circuit, a processor that executes one or more software programs or firmware programs, a memory, an integrated logic circuit, and/or another component that can provide the foregoing function.

FIG. 7 is a schematic diagram of a system according to this application. The system includes a charging trigger apparatus 110 and a roaming charging system 120. The charging trigger apparatus may be configured to perform steps performed by the session management function in FIG. 3 and FIG. 4, or may perform functions of the roaming charging apparatus in FIG. 5. The roaming charging system 120 may be configured to perform the steps performed by the roaming charging system in FIG. 3 and FIG. 4.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A roaming charging method, comprising:
obtaining, by a charging trigger apparatus, roaming charging configuration information after determining that a user corresponding to a data connection session is a roaming user, wherein the roaming charging configuration information comprises a roaming charging information level indication, service information, a roaming multiple user plane function reporting indication, a roaming multiple access data connection session reporting indication, and/or a roaming charging information reporting condition;
generating, by the charging trigger apparatus, roaming charging information of the data connection session based on the roaming charging information level indication, the service information, the roaming multiple user plane function reporting indication, the roaming multiple access data connection session reporting indication, and/or the roaming charging information reporting condition; and
reporting, by the charging trigger apparatus, the roaming charging information to a roaming charging system.

2. The method according to claim 1, wherein the determining, by a charging trigger apparatus, that a user corresponding to a protocol data unit data connection session is a roaming user comprises:
determining, by the charging trigger apparatus based on a home network identifier, of the user, that is reported by user equipment, that the user is the roaming user.

3. The method according to claim 1 or 2, wherein the obtaining roaming charging configuration information of a user comprises:
obtaining, by the charging trigger apparatus, roaming charging configuration information configured on the charging trigger apparatus as the roaming charging configuration information.

4. The method according to any one of claims 1 to 3, wherein the obtaining roaming charging configuration information of a user comprises:
receiving, by the charging trigger apparatus, roaming charging configuration information sent by the roaming charging system; and
using, by the charging trigger apparatus, the roaming charging configuration information sent by the roaming charging system as the roaming charging configuration information.

5. The method according to any one of claims 1 to 4, wherein the roaming charging information level indication is: an indication at a quality of service flow (QoS Flow) level, an indication at a service level, or an indication at a data connection session level; and
when the roaming charging information level indication is the indication at the QoS flow level, the roaming charging information comprises charging information corresponding to the QoS flow; or
when the roaming charging information level indication is the indication at the service level, the roaming charging information comprises charging information corresponding to the service; or
when the roaming charging information level indication is the indication at the data connection session level, the roaming charging information comprises charging information corresponding to the data connection session.

6. The method according to claim 5, wherein the generating, by the charging trigger apparatus, roaming charging information of the data connection session comprises:
when the roaming charging information level indication is the indication at the service level, the charging information corresponding to the service comprises usage of a service, in the data connection session, that corresponds to a rating group, or usage of a service, in the data connection session, that corresponds to a service identifier, or usage of a service, in the data connection session, that corresponds to a service type, or usage of a service, in the data connection session, that corresponds to a rating group and a service identifier.

7. The method according to claim 5 or 6, wherein
the roaming charging information level is the indication at the service level, the roaming charging configuration information further comprises service-related information, the service-related information comprises a service type, a rating group, and/or a service identifier, and the roaming charging information further comprises the service type, the rating group, and/or the service identifier.

8. The method according to any one of claims 5 to 7, wherein
when the charging trigger apparatus is a charging trigger apparatus in a visited network, the roaming charging information further comprises a network slice identifier of the home network and a network slice identifier of the visited network; and/or
the roaming charging configuration information further comprises the multiple user plane function UPF reporting indication, and the roaming charging information further comprises charging information reported by each user plane function in the data connection session or charging information obtained by combining charging information reported by a plurality of UPFs in the data connection session; and/or
the roaming charging configuration information comprises the multiple access data connection session reporting indication, and the roaming charging information comprises charging information corresponding to each access in the data connection session or charging information obtained by combining charging information corresponding to a plurality of accesses in the data connection session.

9. The method according to any one of claims 1 to 8, wherein when the roaming charging configuration information comprises the roaming charging information reporting condition, the generating roaming charging information comprises:
determining, by the charging trigger apparatus, that the roaming charging information reporting condition is met, generating the roaming charging information, and reporting the roaming charging information to the roaming charging system.

10. A roaming charging method, comprising:
receiving, by a roaming charging system, a charging resource creation request, of a data connection session of a user, that is sent by a charging trigger apparatus, wherein the charging resource creation request comprises data connection session information of the user;
generating, by the roaming charging system, second roaming charging configuration information, wherein the second roaming charging configuration information comprises a roaming charging information level indication, service information, a roaming multiple user plane function reporting indication, a roaming multiple access data connection session reporting indication, and/or a roaming charging information reporting condition;
sending, by the roaming charging system, the second roaming charging configuration information to the charging trigger apparatus; and
receiving, by the roaming charging system, roaming charging information sent by the charging trigger apparatus, wherein the roaming charging information is generated based on the second roaming charging configuration information that is sent by the roaming charging system.

11. The charging method according to claim 10, wherein the method further comprises:
the charging resource creation request comprises first roaming charging configuration information, the first roaming charging configuration information comprises a roaming charging information level indication, service information, a roaming multiple user plane function reporting indication, a roaming multiple access data connection session reporting indication, and/or a roaming charging information reporting condition, and the second roaming charging configuration information is used by the charging trigger apparatus to update the first roaming charging configuration information in the charging trigger apparatus.

12. The charging method according to claim 11, wherein the method further comprises:
determining, by the roaming charging system based on the first roaming charging configuration information carried in the charging resource creation request, to generate the second roaming charging configuration information for updating the first roaming charging configuration information.

13. The charging method according to any one of claims 10 to 12, wherein the method further comprises:
generating, by the roaming charging system, a charging data record (Charging Data Record, CDR) for the user, wherein the charging data record comprises the roaming charging information.

14. The charging method according to claim 13, wherein the method further comprises:
when the roaming charging information comprises charging information corresponding to a QoS flow, the charging data record comprises the charging information corresponding to the QoS flow; or
when the roaming charging information comprises charging information corresponding to a service, the charging data record comprises the charging information corresponding to the service; or
when the roaming charging information comprises charging information corresponding to a data connection session, the charging data record comprises the charging information corresponding to the data connection session.

15. The charging method according to claim 13 or 14, wherein when the charging trigger apparatus is a charging trigger apparatus in a visited network, the roaming charging information comprises a network slice identifier, of a home network, that corresponds to the data connection session, and the charging data record comprises the network slice identifier of the home network.

16. The charging method according to any one of claims 13 to 15, wherein the roaming charging system generates a detailed data record, wherein the detailed data record comprises a detailed data record corresponding to the QoS flow, a detailed data record corresponding to the service, or a detailed data record corresponding to the data connection session, and the detailed data record is generated based on the charging data record.

17. A roaming charging apparatus, comprising:
an obtaining module, configured to obtain roaming charging configuration information after a processing module determines that a user corresponding to a data connection session is a roaming user, wherein the roaming charging configuration information comprises a roaming charging information level indication, service information, a roaming multiple user plane function reporting indication, a roaming multiple access data connection session reporting indication, and/or a roaming charging information reporting condition, wherein
the processing module is configured to generate, through a charging trigger apparatus, roaming charging information of the data connection session based on the roaming charging information level indication, the service information, the roaming multiple user plane function reporting indication, the roaming multiple access data connection session reporting indication, and/or the roaming charging information reporting condition; and
a sending module, configured to report the roaming charging information to a roaming charging system.

18. The apparatus according to claim 17, wherein that a processing module determines that a user corresponding to a data connection session is a roaming user comprises:
the processing module determines, based on a home network identifier, of the user, that is reported by user equipment, that the user is the roaming user.

19. The apparatus according to claim 17 or 18, wherein that an obtaining module obtains roaming charging configuration information of a user comprises:
the obtaining module obtains roaming charging configuration information configured on the charging trigger apparatus as the roaming charging configuration information.

20. The apparatus according to any one of claims 17 to 19, wherein that an obtaining module obtains roaming charging configuration information of a user comprises:
the obtaining module receives roaming charging configuration information sent by the roaming charging system; and
the obtaining module uses the roaming charging configuration information sent by the roaming charging system as the roaming charging configuration information.

21. The apparatus according to any one of claims 17 to 20, wherein the roaming charging information level indication is: an indication at a quality of service flow (QoS Flow) level, an indication at a service level, or an indication at a data connection session level; and
when the roaming charging information level indication is the indication at the QoS flow level, the roaming charging information comprises charging information corresponding to the QoS flow; or
when the roaming charging information level indication is the indication at the service level, the roaming charging information comprises charging information corresponding to the service; or
when the roaming charging information level indication is the indication at the data connection session level, the roaming charging information comprises charging information corresponding to the data connection session.

22. The apparatus according to claim 21, wherein that the processing module generates roaming charging information of the data connection session comprises:
when the roaming charging information level indication is the indication at the service level, the charging information corresponding to the service comprises usage of a service, in the data connection session, that corresponds to a rating group, or usage of a service, in the data connection session, that corresponds to a service identifier, or usage of a service, in the data connection session, that corresponds to a service type, or usage of a service, in the data connection session, that corresponds to a rating group and a service identifier.

23. A roaming charging system, comprising:
a receiving module, configured to receive a charging resource creation request, of a data connection session of a user, that is sent by a charging trigger apparatus, wherein the charging resource creation request comprises data connection session information of the user;
a processing module, configured to generate second roaming charging configuration information, wherein the second roaming charging configuration information comprises a roaming charging information level indication, service information, a roaming multiple user plane function reporting indication, a roaming multiple access data connection session reporting indication, and/or a roaming charging information reporting condition; and
a sending module, configured to send the second roaming charging configuration information to the charging trigger apparatus, wherein
the receiving module is further configured to receive roaming charging information sent by the charging trigger apparatus, wherein the roaming charging information is generated based on the second roaming charging configuration information that is sent by the roaming charging system.

24. The charging system according to claim 23, wherein
the charging resource creation request comprises first roaming charging configuration information, the first roaming charging configuration information comprises a roaming charging information level indication, service information, a roaming multiple user plane function reporting indication, a roaming multiple access data connection session reporting indication, and/or a roaming charging information reporting condition, and the second roaming charging configuration information is used by the charging trigger apparatus to update the first roaming charging configuration information in the charging trigger apparatus.

25. The charging system according to claim 23, wherein
the processing module is further configured to determine, based on the first roaming charging configuration information carried in the charging resource creation request, to generate the second roaming charging configuration information for updating the first roaming charging configuration information.

26. The charging system according to any one of claims 23 to 25, wherein the method further comprises:
the processing module is further configured to generate a charging data record (Charging Data Record, CDR) for the user, wherein the charging data record comprises the roaming charging information.

27. A roaming charging apparatus, comprising a communication interface, a memory, and one or more processors, wherein one or more programs are stored in the memory; and when the one or more processors execute the one or more programs, the electronic device is enabled to implement the method according to any one of claims 1 to 9.

28. A computer storage medium, comprising computer instructions, wherein when the computer instructions are run on an electronic device, the electronic device is enabled to perform the method according to any one of claims 1 to 9.

29. A computer program product, wherein when the computer program product runs on a computer, the computer is enabled to perform the method according to any one of claims 1 to 9.

30. A roaming charging system, comprising a communication interface, a memory, and one or more processors, wherein one or more programs are stored in the memory; and when the one or more processors execute the one or more programs, the electronic device is enabled to implement the method according to any one of claims 10 to 16.

31. A computer storage medium, comprising computer instructions, wherein when the computer instructions are run on an electronic device, the electronic device is enabled to perform the method according to any one of claims 10 to 16.

32. A computer program product, wherein when the computer program product runs on a computer, the computer is enabled to perform the method according to any one of claims 10 to 16.

33. A system, comprising a charging trigger apparatus and a roaming charging system, wherein
the charging trigger apparatus is configured to perform the method according to any one of claims 1 to 9, and the roaming charging system is configured to perform the method according to any one of claims 10 to 16.
